Europäisches Patentamt

European Patent Office

Office européen des brevets

(11) Veröffentlichungsnummer: **0 343 335 B1**

## EUROPÄISCHE PATENTSCHRIFT

(45) Veröffentlichungstag der Patentschrift: **16.12.92**

(21) Anmeldenummer: **89104859.7**

(22) Anmeldetag: **18.03.89**

(51) Int. Cl.⁵: **F16F 9/36**, F16F 9/02

---

(54) **Gasfeder.**

---

(30) Priorität: **26.05.88 DE 3817776**

(43) Veröffentlichungstag der Anmeldung:
**29.11.89 Patentblatt 89/48**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI NL SE**

(56) Entgegenhaltungen:
**EP-A- 0 291 469**
**DE-A- 2 144 681**
**US-A- 2 476 324**
**US-A- 2 513 533**
**US-A- 4 268 045**

(73) Patentinhaber: **SUSPA COMPART Aktiengesellschaft**
**Industriestrasse 12-14**
**W-8503 Altdorf(DE)**

(72) Erfinder: **Bauer, Hans Jürgen**
**Am Eichenhain 8**
**W-8503 Altdorf(DE)**
Erfinder: **Bauer, Hans-Peter**
**Ziegelhütte 9**
**W-8503 Altdorf(DE)**
Erfinder: **Antoniani, Mario**
**Via Manzoni 5**
**I-10093 Collegno (Turin)(IT)**

(74) Vertreter: **Rau, Manfred, Dr. Dipl.-Ing. et al
Rau & Schneck, Patentanwälte Königstrasse
2**
**W-8500 Nürnberg 1(DE)**

---

**Beschreibung**

Die Erfindung betrifft eine Gasfeder nach dem Oberbegriff des Anspruches 1.

Derartige Gasfedern werden unter anderem auch als Hubhilfen für Heckklappen von Automobilen eingesetzt. Gerade wenn es sich um relativ kleine Automobile handelt, reicht an sich die Hubkraft nur einer Gasfeder aus, die Heckklappe zu heben; hierbei taucht aber das Problem auf, daß gerade bei leichter Bauweise kleiner Pkw's und bei Vorhandensein nur einer Gasfeder die Heckklappe verwunden wird. Es sind daher bereits zahlreiche Versuche gemacht worden, die Heckklappe in geschlossenem Zustand zu entlasten, die hierbei gefundenen Lösungen waren funktionell und/oder vom erforderlichen Aufwand her nicht befriedigend.

Aus der US-A-2 513 533 ist eine Gasfeder nach dem Oberbegriff des Anspruches 1 bekannt, dessen Stützring mit einer sich verjüngenden Lippe versehen ist, die gegen die Kolbenstange unter Druck anliegt, um so eine gute Unterstützung der Dichtung zwischen dem Innenraum der Gasfeder mit hohem Druck und dem Außenrohr mit Atmosphärendruck zu gewährleisten. Die vorstehend angesprochenen Probleme der unter anderem als Hubhilfen für Heckklappen von Automobilen eingesetzten Gasfedern sind hierbei weder angesprochen noch gelöst.

Aus der lediglich nach Artikel 54 (3) EPÜ zum Stand der Technik gehörenden EP-A-0 291 469 ist eine Gasfeder mit einem rohrförmigen, an einem Ende geschlossenen, einen mit Druckgas gefüllten Innenraum aufweisenden Gehäuse bekannt. Aus dem anderen Ende des Gehäuses ist eine Kolbenstange herausgeführt, die an ihrem im Gehäuse befindlichen Ende mit einem Kolben zur seitlichen Abstützung gegenüber der Innenwand des Gehäuses versehen ist. Die Kolbenstange ist an dem anderen Ende des Gehäuses in einer Führungsbüchse geführt und in die Richtung einer Mittel-Längs-Achse zwischen einer weitgehend in das Gehäuse eingeschobenen Stellung und einer weitgehend aus dem Gehäuse ausgefahrenen Stellung verschiebbar. Sie liegt gegen eine aus einem elastischen Dichtungswerkstoff bestehende Dichtung abdichtend an und weist eine in der eingeschobenen Stellung der Kolbenstange mit der Dichtung zusammenwirkende Verjüngung auf. Die Dichtung kann mit einer radial wirkenden Ringfeder umgeben sein, die die Dichtung an die Kolbenstange andrückt.

Der Erfindung liegt daher die Aufgabe zugrunde, eine Gasfeder der gattungsgemäßen Art so auszugestalten, daß sie in eingeschobenem Zustand eine verringerte Ausschubkraft aufweist.

Diese Aufgabe wird erfindungsgemäß durch die Merkmale im Kennzeichnungsteil des Anspruches 1 gelöst. Durch die Verjüngung wird der wirksame Querschnitt der Kolbenstange, auf den der Gasdruck wirkt, reduziert, d.h. die auf die Kolbenstange in deren eingeschobener Stellung wirkende Ausschubkraft ist reduziert. Wenn beispielsweise der Durchmesser der Kolbenstange von 8 mm auf 6 mm verjüngt wird, dann bedeutet dies fast eine Halbierung der in eingeschobenem Zustand noch wirkenden Ausschubkräften im Vergleich zu bei nicht eingeschobener Kolbenstange wirkenden Ausschubkräften. Trotz der Verjüngung ist sichergestellt, daß auch beim Zusammenwirken der Dichtung mit der Verjüngung eine absolut sichere Dichtung gewährleistet ist. Der Stützring unterstützt die Dichtung insbesondere in axialer Richtung, aber auch in radialer Richtung. Durch die Maßnahmen nach Anspruch 2 ist sichergestellt, daß die Dichtung immer gegen die Kolbenstange gedrückt, also nicht von dieser abgehoben werden kann. Durch die Weiterbildung nach Anspruch 3 wird sichergestellt, daß die Dichtung in ihrem Inneren, an der Kolbenstange anliegenden Bereich auch die relativ großen Durchmesseränderungen vom normalen Kolbenstangenquerschnitt zur Verjüngung mitmachen kann. Anspruch 4 gibt hierzu eine vorteilhafte Weiterbildung an.

Durch die Ausgestaltung nach Anspruch 5 wird sichergestellt, daß der Stützring der Dichtung eine gegen den Gasdruck gerichtete axiale Unterstützung gibt.

Die Ausgestaltung des Stützrings nach Anspruch 6 ermöglicht es, daß auch der Stützring die radialen Bewegungen der Dichtung beim Übergang von der Verjüngung auf den normalen Kolbenstangendurchmesser und umgekehrt mitmachen kann und hierbei seiner Stützfunktion in vollem Umfang gerecht wird.

Die Weiterbildung nach Anspruch 7 führt dazu, daß auch der Stützring von sich aus auf die Dichtung beim Einfahren der Verjüngung in die Dichtung einen gewissen einschnürenden Effekt ausübt.

Weitere Einzelheiten der Erfindung ergeben sich aus weiteren Unteransprüchen und der nachfolgenden Beschreibung eines Ausführungsbeispiels der Erfindung anhand der Zeichnung. Es zeigt

Fig. 1     eine Gasfeder nach der Erfindung im axialen Längsschnitt, wobei die Kolbenstange in ihrer ausgefahrenen Stellung ist,

Fig. 2     einen Teil der Gasfeder im axialen Längsschnitt, wobei die Kolbenstange in ihrer eingefahrenen Stellung ist,

Fig. 3     einen Querschnitt durch einen Stützring,

Fig. 4     eine Draufsicht auf den Stützring gemäß dem Sichtpfeil IV in Fig. 3,

Fig. 5     eine Draufsicht auf den Stützring gemäß dem Sichtpfeil V in Fig. 3 und

Fig. 6 eine abgewandelte Form eines Stützrings.

Die in der Zeichnung dargestellte Gasfeder weist ein im wesentlichen zylindrisches, aus einem Rohr hergestelltes Gehäuse 1 auf, das an einem Ende 2 geschlossen ausgebildet ist. Aus dem anderen Ende 3 des Gehäuses 1 ist eine zylindrische Kolbenstange 4 herausgeführt, die koaxial zur Mittel-Längs-Achse 5 des Gehäuses 1 angeordnet ist. Die Kolbenstange 4 weist an ihrem im Gehäuse 1 befindlichen Ende einen Kolben 6 auf, der in üblicher Weise als Führungs- und Dämpfungskolben ausgebildet ist, wobei es auf die Einzelheiten der Ausgestaltung hier nicht ankommt. Dieser Kolben 6 stützt sich - zumindest mit einem Teil seines Außenumfanges - gegen die Innenwand 7 des Gehäuses 1 ab. Der Innenraum 8 des Gehäuses 1 ist mit Druckgas und gegebenenfalls einer kleinen Menge Öl gefüllt. Am geschlossenen Ende 2 des Gehäuses ist eine Befestigungseinrichtung 9 in Form eines sogenannten Auges angebracht. Am äußeren freien Ende der Kolbenstange 4 ist ebenfalls eine gegebenenfalls gleichartig ausgebildete Befestigungseinrichtung 10 angebracht.

Die Kolbenstange 4 ist über den größten Teil ihrer Länge zylindrisch ausgebildet und weist dort einen Durchmesser D auf. Sie ist am Ende 3 des Gehäuses 1 in einer Führungsbüchse 11 geführt, deren koaxial zur Achse 5 verlaufende, die Kolbenstange 4 aufnehmende Bohrung 12 einen etwa dem Durchmesser D entsprechenden Durchmesser $D'$ aufweist, so daß die Kolbenstange 4 über ihre wesentliche Länge, in der sie einen Durchmesser D hat, radial weitgehend spielfrei geführt ist.

Auf der dem Innenraum 8 zugewandten Seite der Führungsbüchse 11 liegt an dieser ein Stützring 13 mit einem ringförmigen Grundkörper 14 an. Gegen diesen Stützring 13 liegt wiederum auf der dem Innenraum 8 zugewandten Seite eine gegebenenfalls mit dem Stützring 13 fest verbundene Dichtung 15 an. Diese einstückig aus elastisch nachgiebigem Dichtungsmaterial, beispielsweise Gummi oder einem geeigneten Kunststoff, bestehende Dichtung 15 weist einen dichtend an der Innenwand 7 anliegenden Außenring 16 und einen dichtend an der Kolbenstange 4 anliegenden Innenring 17 auf. Der Außenring 16 und der Innenring 17 sind durch einen sich kegelstumpfförmig zum Innenraum 8 hin verjüngenden Zwischenring 18 miteinander verbunden, der membranartig ausgestaltet ist und dessen Dicke s in axialer Richtung deutlich kleiner ist als die axiale Erstreckung des Dichtbereiches t des Außenrings bzw. des Dichtbereiches u des Innenrings 17. Der Außenring 16 liegt auf seiner dem Innenraum 8 zugewandten Seite gegen eine Haltescheibe 19 an, die in axialer Richtung im Gehäuse 1 durch eine Sicke 20 festgelegt ist. Die Bohrung 21 dieser Haltescheibe 19 hat einen Durchmesser $D''$, der etwas größer als der Durchmesser D der Kolbenstange ist, so daß ein sich unmittelbar an den Zwischenring 18 und den Innenring 17 der Dichtung 15 anschliessenden Raum 22 ständig mit dem Gasdruck aus dem Innenraum 8 beaufschlagt ist und somit den Innenring 17 gegen die Kolbenstange 4 preßt.

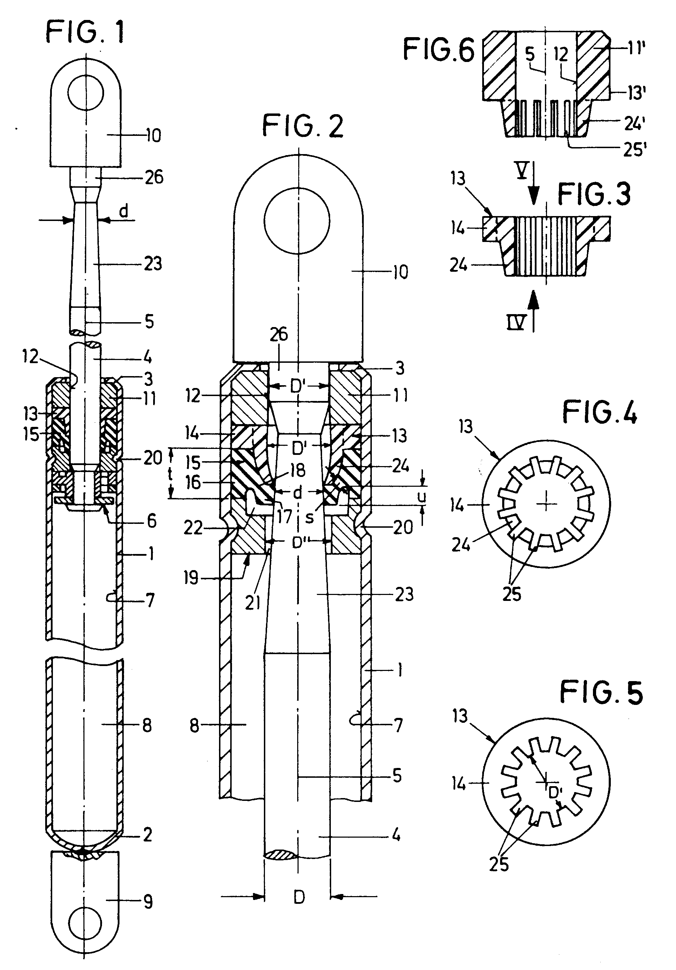

Die Kolbenstange 4 weist im Bereich ihres äußeren freien Endes eine sich kegelstumpfförmig nach außen einschnürende Verjüngung 23 auf. Diese Verjüngung kommt in der in Fig. 2 dargestellten eingeschobenen Stellung der Kolbenstange 4 in Überdeckung mit der Dichtung 15 und zwar insbesondere mit dem Innenring 17 der Dichtung 15. Die Kolbenstange 4 weist im Bereich der Verjüngung 23 einen Durchmesser d auf, der um 20 bis 30 % kleiner ist als der Durchmesser D. Als Bereich des Durchmessers d wurde der Bereich der Verjüngung 23 gewählt, an dem der Innenring 17 der Dichtung 15 bei völlig eingefahrener Kolbenstange 4 anliegt, wie es in Fig. 2 dargestellt ist. Der Stützring 13 weist sich in Richtung zum Innenraum 8 hin erstreckte, also im wesentlichen parallel zur Achse 5 verlaufende, Stege 24 auf, zwischen denen jeweils Schlitze 25 ausgebildet sind. Die Schlitze 25 er-strekken sich insbesondere aus fertigungstechni-schen Gründen durch den ringförmigen Grundkörper 14 des Stützringes 13. Die Stege 24 verjüngen sich zu ihrem freien Ende hin und liegen hiermit gegen den Innenring 17 der Dichtung 15 auf dessen dem Innenraum 8 abgewandten Seite an. Hierdurch stützen sie diesen Innenring 15 in axialer Richtung gegen Verschiebungen aufgrund des Gasdruckes in Richtung zum Ende 3 hin. Wenn die Stege 24 in unverformtem Zustand bereits die in Fig. 2 dargestellte Form haben, in der sie zu ihren freien Enden hin radial nach innen ragen, dann üben sie zusätzlich auf den Innenring 17 auch radial einschnürende Kräfte aus.

Der Innendurchmesser $D'$ des ringförmigen Grundkörpers 14 entspricht dem Durchmesser $D'$ der Bohrung 12 der Führungsbüchse 11, so daß der Stützring 13 zumindest im Bereich seines Grundkörpers 14 die Kolbenstange im Bereich ihres großen Durchmessers D ebenfalls führt. Der Durchmesser $D'$ ist nur um das übliche Führungsspiel von einigen hundertstel bis maximal zehntel Milimetern größer als der Durchmesser D der Kolbenstange 4.

Der mit seinem ringförmigen Grundkörper 14 und den Stegen 24 an der metallischen Kolbenstange 4 anliegende Stützring 13 besteht zweckmäßigerweise aus einem Kunststoff mit guten Gleiteigenschaften gegen Metall, wie beispielsweise einem Polytetrafluoräthylen oder einem geeigneten Polyamid. Der Stützring 13 kann aber auch aus Messing oder Bronze mit den entsprechend guten Gleiteigenschaften gegen das härtere Metall (verchromter Stahl) der Kolbenstange 4 ausgebildet sein.

Die Kolbenstange 4 weist benachbart zu der äußeren Befestigungseinrichtung 10 einen zylindrischen Abschnitt 26 mit dem Durchmesser D, also einen nicht verjüngten Abschnitt auf, der in der völlig eingefahrenen Stellung der Kolbenstange 4 gemäß Fig. 2 in die Bohrung 12 der Führungsbüchse 11 gelangt, so daß in dieser Stellung Radialbewegungen der Kolbenstange relativ zum Gehäuse 1 ausgeschlossen sind.

Bei der abgewandelten Ausführungsform nach Fig. 6 ist die Führungsbüchse 11′ einstückig mit dem Stützring 13′ ausgebildet, d.h. zwischen der Führungsbüchse 11 und einem bei dem zuvor beschriebenen Ausführungsbeispiel vorhandenen Grundkörper besteht kein Unterschied mehr. Die Führungsbüchse 11′ hat gleichzeitig die Funktion eines Grundkörpers. An die Führungsbüchse 11′ schließen sich nach unten die Stege 24′ mit zwischen ihnen angeordneten Schlitzen 25′ an, wie dies bereits oben geschildert wurde. Die Bohrung 12 der Führungsbüchse 11′ ist identisch mit der Bohrung 12 der oben beschriebenen Führungsbüchse 11. Wie Fig. 6 entnehmbar ist, erstrecken sich bei dieser Ausgestaltung die Schlitze 25′ nicht bis in die Führungsbüchse 11′ hinein, damit die Bohrung 12 eine glatte kreiszylindrische Oberfläche aufweist.

**Patentansprüche**

1. Gasfeder mit einem rohrförmigen, an einem Ende (2) geschlossenen, einen mit Druckgas gefüllten Innenraum (8) aufweisenden Gehäuse (1) und mit einer aus dem anderen Ende (3) des Gehäuses (1) herausgeführten Kolbenstange (4), die an ihrem im Gehäuse (1) befindlichen Ende mit einem Kolben (6) zur seitlichen Abstützung gegenüber der Innenwand (7) des Gehäuses (1) versehen ist, die an dem anderen Ende (3) des Gehäuses (1) in einer Führungsbüchse (11,11') geführt und in Richtung einer Mittel-Längs-Achse (5) zwischen einer weitgehend in das Gehäuse (1) eingeschobenen Stellung und einer weitgehend aus dem Gehäuse (1) ausgefahrenen Stellung verschiebbar ist, gegen die eine aus einem elastischen Dichtungswerkstoff bestehende Dichtung (15) abdichtend anliegt, die radial nachgiebig ausgebildet und mit einem axial wirkenden radial nachgiebigen Stützring (13,13') versehen ist, dadurch gekennzeichnet, daß die Kolbenstange (4) eine in deren eingeschobener Stellung mit der Dichtung (15) zusammenwirkende Verjüngung (23) aufweist.

2. Gasfeder nach Patentanspruch 1, dadurch gekennzeichnet, daß die Dichtung (15) auf ihrer dem Innenraum (8) zugewandten Seite vom Druckgas und auf ihrer dem Innenraum (8) abgewandten Seite vom Athmospärendruck beaufschlagt ist.

3. Gasfeder nach Patentanspruch 1, dadurch gekennzeichnet, daß die Dichtung (15) einen an der Kolbenstange (4) anliegenden Innenring (17) und einen diesen umgebenden membranartigen Zwischenring (18) aufweist.

4. Gasfeder nach Patentanspruch 3, dadurch gekennzeichnet, daß der Zwischenring (18) sich zum Innenraum (8) hin verjüngend ausgebildet ist.

5. Gasfeder nach Patentanspruch 2, dadurch gekennzeichnet, daß der Stützring (13,13') auf der dem Innenraum (8) abgewandten Seite der Dichtung (15) angeordnet ist.

6. Gasfeder nach Patentanspruch 1, dadurch gekennzeichnet, daß der Stützring (13,13') einen ringförmigen Grundkörper (14) aufweist, an dem etwa parallel zur Achse (5) verlaufende, radial zur Achse (5) elastisch bewegbare Stege (24,24') ausgebildet sind.

7. Gasfeder nach Patentanspruch 6, dadurch gekennzeichnet, daß die Dichtung (15) axial gegen die Stege (24,24') anliegt.

8. Gasfeder nach Patentanspruch 6, dadurch gekennzeichnet, daß zwischen benachbarten Stegen (24) sich parallel zur Achse (5) erstreckende Schlitze (25) ausgebildet sind, die sich durch den ringförmigen Grundkörper (14) erstrecken.

9. Gasfeder nach Patentanspruch 1, dadurch gekennzeichnet, daß der Stützring (13,13') aus Kunststoff mit guten Gleiteigenschaften gegen Metall besteht.

10. Gasfeder nach Patentanspruch 1, dadurch gekennzeichnet, daß der Stützring (13,13') und die Dichtung (15) fest miteinander verbunden sind.

11. Gasfeder nach Patentanspruch 1, dadurch gekennzeichnet, daß der Stützring (13') einstückig mit der Führungsbüchse (11') ausgebildet ist und daß an der Führungsbüchse (11') etwa parallel zur Achse (5) verlaufende, radial zur Achse (5) elastisch bewegbare Stege (24') ausgebildet sind, zwischen denen sich parallel zur Achse (5) erstreckende Schlitze (25') ausgebildet sind.

**12.** Gasfeder nach Patentanspruch 11, dadurch gekennzeichnet, daß die Schlitze (25') nur zwischen den Stegen (24') ausgebildet sind.

## Claims

**1.** A gas spring with a tubular housing (1) closed at one end (2) and having an inner space (8) filled with compressed gas and a piston rod (4) brought out of the other end (3) of the housing (1) which piston rod is provided at its end situated in the housing (1) with a piston (6) for lateral support relative to the inner wall (7) of the housing (1), which rod, at the other end (3) of the housing (1) is guided in a guide bush (11, 11') and, in the direction of a central longitudinal axis (5), can be moved between a position generally pushed into the housing (1) and a position generally extended out of the housing (1), against which a seal (15) made in an elastic sealing material sealingly applies, which is designed to yield radially and is provided with an axially acting radially yielding back-up ring (13, 13'), characterized in that the piston (4) has a tapering (23) which, in its pushed in position, cooperates with the seal (15).

**2.** A gas spring according to claim 1, characterized in that the seal (15) is impinged on its side facing the inner space (8) by the compressed gas, and on its side facing away from the inner space (8) by atmospheric pressure.

**3.** A gas spring according to claim 1, characterized in that the seal (15) has an inner ring (17) applying on the piston rod (4) and a membrane-like intermediate ring (18) surrounding the latter.

**4.** A gas spring according to claim 3, characterized in that the intermediate ring (18) is designed to taper towards the inner space (8).

**5.** A gas spring according to Claim 2, characterized in that the back-up ring (13, 13') is mounted on the side of the seal (15) racing away from the inner space (8).

**6.** A gas spring according to claim 1, characterized in that the back-up ring (13, 13') has an annular base element (14) on which webs (24, 24') are formed with extend substantially parallel with the axis (5) and move elastically radially towards the axis (5).

**7.** A gas spring according to claim 6, characterized in that the seal (15) applies axially against the webs (24, 24')

**8.** A gas spring according to claim 6, characterized in that between adjacent webs (24) grooves (25) are formed which extend parallel with the axis ( 5) and through the annular base element (14)

**9.** A gas spring according to Claim 1, characterized in that the back-up ring (13, 13') is of plastic with good sliding properties against metal.

**10.** A gas spring according to Claim 1, characterized in that the back-up ring (13, 13') and the seal (15) are rigidly connected together.

**11.** A gas spring according to claim 1, characterized in that the back-up ring (13') is formed integral with the guide bush (11') and in that webs (24') are formed on the guide bush (11') extending substantially parallel with the axis (5), movable elastically radially to the axis (5) between which grooves (25') are formed extending parallel with the axis (5).

**12.** A gas spring according to claim 11, characterized in that the grooves (25') are formed only between the webs (24').

## Revendications

**1.** Ressort à gaz comportant un carter (1) de forme tubulaire, qui est fermé à une extrémité et qui présente une chambre intérieure (8) remplie d'un gaz sous pression, et comportant également une tige de piston (4) qui sort à l'autre extrémité (3) du carter (1), qui à son extrémité se trouvant dans le carter (1) est pourvue d'un piston (6) pour l'appui latéral par rapport à la paroi intérieure (7) du carter (1), qui à l'autre extrémité (3) du carter (1) est guidée dans une douille de guidage (11, 11') et peut coulisser dans la direction d'un axe longitudinal médian (5) entre une position largement rentrée dans le carter (1) et une position largement sortie du carter (1), et contre laquelle s'applique de manière étanche, un joint d'étanchéité (15) qui est réalisé en un matériau élastique d'étanchéité, qui présente une souplesse radiale et qui est muni d'une bague d'appui (13, 13') à souplesse radiale et agissant en direction axiale, caractérisé en ce que la tige de piston (4) présente un rétrécissement (23) coopérant avec le joint d'étanchéité (15) en position rentrée de la tige de piston.

2. Ressort à gaz selon la revendication 1, caractérisé en ce que le joint d'étanchéité (15) est sollicité par le gaz sous pression sur son côté dirigé vers la chambre intérieure (8), et par la pression atmosphérique sur son côté éloigné de la chambre intérieure (8).

3. Ressort à gaz selon la revendication 1, caractérisé en ce que le joint d'étanchéité (15) comprend une bague intérieure (17) s'appuyant contre la tige de piston (4), et une bague intermédiaire (18) en forme de membrane entourant la bague intérieure.

4. Ressort à gaz selon la revendication 3, caractérisé en ce que la bague intermédiaire (18) est réalisée de manière à se rétrécir en direction de la chambre intérieure (18).

5. Ressort à gaz selon la revendication 2, caractérisé en ce que la bague d'appui (13, 13') est disposée sur le côté du joint d'étanchéité (15), éloigné de la chambre intérieure (8).

6. Ressort à gaz selon la revendication 1, caractérisé en ce que la bague d'appui (13, 13') comporte un corps de base (14) de forme annulaire, sur lequel sont réalisées des nervures (24, 24') s'étendant de manière sensiblement parallèle à l'axe (5) et déplaçables de manière élastique radialement à l'axe (5).

7. Ressort à gaz selon la revendication 6, caractérisé en ce que le joint d'étanchéité (15) s'appuie axialement contre les nervures (24, 24').

8. Ressort à gaz selon la revendication 6, caractérisé en ce qu'entre des nervures voisines (24) sont réalisées des fentes (25) s'étendant parallèlement à l'axe (5) et au travers du corps de base (14) de forme annulaire.

9. Ressort à gaz selon la revendication 1, caractérisé en ce que la bague d'appui (13, 13') est réalisé en une matière plastique présentant de bonnes propriétés anti-friction à l'encontre du métal.

10. Ressort à gaz selon la revendication 1, caractérisé en ce que la bague d'appui (13, 13') et le joint d'étanchéité (15) sont reliés entre-eux de manière fixe.

11. Ressort à gaz selon la revendication 1, caractérisé en ce que la bague d'appui (13') est réalisée d'un seul tenant avec la douille de guidage (11'), et en ce que sur la douille de guidage (11') sont réalisées des nervures (24') s'étendant sensiblement de manière parallèle à l'axe (5), mobiles de manière élastique radialement par rapport à l'axe (5), et entre lesquelles sont formées des fentes (25') s'étendant parallèlement à l'axe (5).

12. Ressort à gaz selon la revendication 11, caractérisé en ce que les fentes (25') ne sont réalisées qu'entre les nervures (24').

FIG. 1

FIG. 2

FIG.6

FIG.3

FIG.4

FIG.5